# EUROPEAN PATENT APPLICATION

(11) **EP 0 583 614 A1**
(43) Date of publication of application: **23.02.1994**
(21) Application number: 93111227.0
(22) Date of filing: 13.07.1993
(51) Int. Cl.: B29D 30/70, B29C 53/58

(54) **Method and device for producing a vehicle tire reinforced tread belt**

(30) Priority: 17.07.1992 IT TO920616
(71) Applicant: BRIDGESTONE CORPORATION, Tokyo 104 (JP)
(72) Inventor: Siegenthaler, Karl J., I-00100 Roma, Ostia (IT)
(74) Representative: Jorio, Paolo

(57) **Abstract**

A reinforced tread belt (2), two portions of which are defined by two superimposed reinforced tread plies (3, 4) having oppositely-inclined reinforcing wires and located one inside the other and on either side of a substantially elastic annular insert (33), is formed from a tubular annular element (43) formed, at least partially, by spirally winding a wire (32) coated with elastomeric material about the insert (33).

## Description

The present invention relates to a method of producing a vehicle tire reinforced tread belt.

More specifically, the present invention relates to a method of producing a reinforced tread belt, two portions of which define two superimposed reinforced annular tread plies and present oppositely-inclined reinforcing wires.

Road vehicle tires are known to feature, between the carcass and the tread, a reinforced tread belt normally defined by two reinforced annular tread plies, each of which is normally produced from a calendered ply with longitudinal reinforcing wires. The calendered ply is cut transversely, at a respective angle in relation to the perpendicular to the reinforcing wires, into a number of reinforced portions of the same width (measured perpendicular to the cutting direction) as the reinforced tread plies being produced. The portions are then spliced end to end, i.e. at the ends coinciding with the lateral edges of the calendered ply, to form a single reinforced strip of the same width as the respective reinforced tread ply, and which is produced by cutting the strip to size parallel to the reinforcing wires, and splicing the opposite ends of the resulting strip portion.

The above method of producing reinforced tread belt plies presents several drawbacks. Firstly, the joints between the various component portions and between the opposite ends of the strip portion constitute discontinuous elements invariably affecting the uniformity of the finished tire. Secondly, each reinforcing wire in the strip portion is a portion of a respective longitudinal wire in the original calendered ply. Consequently, as the "history" of the longitudinal wires in the calendered ply normally varies from one wire to another, each wire portion in the reinforced strip portion introduces into the finished tire an independent variable, the effect and nature of which are totally unpredictable and may negatively affect the physical characteristics of the finished tire.

It is an object of the present invention to provide as straightforward a method as possible of producing reinforced tread plies, and which at the same time provides for substantially overcoming the aforementioned drawbacks.

It is a further object of the present invention to provide a method of prodicing a reinforced tread belt capable of cooperating with the tread and, above all, with the sidewalls of the tire, for absorbing the low-frequency vibration to which the tire is subjected in use.

According to the present invention, there is provided a method of producing a vehicle tire reinforced tread belt comprising two portions defining two superimposed reinforced tread plies and having oppositely-inclined reinforcing wires; said method being characterized by the fact that the reinforced tread belt is produced by spirally winding a reinforcing wire in a coil about an elastic annular element, so as to produce, at least partially, a spliceless tubular annular element, a first and second annular portion of which, located respectively outside and inside the elastic annular element, define said two tread plies.

According to a preferred embodiment of the above method, said wire is wound spirally about said annular element by feeding the wire along an annular path extending through the annular element; and by simultaneously rotating the annular element at a second given traveling speed.

The required pitch of said spiral is preferably achieved by moving the wire and the annular element at a respective first and second given speed; said pitch being a function of the ratio of said two speeds.

According to the preferred embodiment described above, said spiral comprises a number of turns, each defined by two oppositely-inclined branches respectively inside and outside said annular element, and the inclination of which is also a function of said ratio of said two speeds.

According to the present invention, there is also provided a device for producing a vehicle tire reinforced tread belt comprising two portions defining two superimposed reinforced tread plies and having oppositely-inclined reinforcing wires; said device being characterized by the fact that it comprises means for supporting an elastic annular element; and means for spirally winding a reinforcing wire in a coil about said elastic annular element, so as to produce, at least partially, a spliceless tubular annular element, a first and second annular portion of which, located respectively outside and inside the elastic annular element, define said two tread plies.

A non-limiting embodiment of the present invention will be described by way of example with reference to the accompanying drawings, in which:
Fig.1 shows a schematic view in perspective of a preferred embodiment of the device according to the present invention;
Fig.2 shows an enlarged view in perspective of a detail in Fig.1;
Fig.3 shows an enlarged view in perspective of a detail in Fig.2;
Fig.4 shows a view in perspective of the Fig.2 detail at a possible follow-up stage;
Fig.s 5 and 6 show schematic views, with parts removed for simplicity, of a Fig.1 detail in two distinct operating configurations.

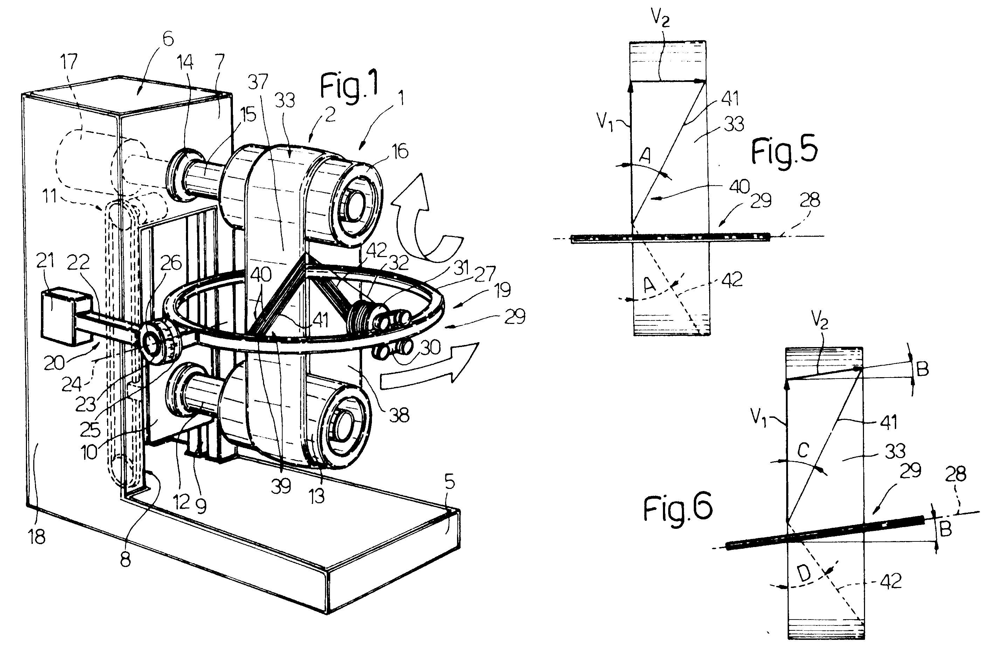

Number 1 in Fig.1 indicates a device for producing a tread belt 2 (Fig.s 2 and 4) having an outer annular portion and an inner annular portion defining two reinforced annular tread plies 3 and 4.

Device 1 comprises a base 5 from one lateral end of which there extends upwards a substantially square-section upright 6. The front lateral wall 7 of upright 6 presents, as of base 5, an opening 8 extending over the bottom portion of wall 7 and defining, in wall 7, two vertical slideways 9 for a slide 10, the position of which along slideways 9 is controlled by a known chain actuating device 11. Slide 10 is fitted integral with a projecting shaft 12 extending over base 5 substantially horizontally and perpendicular to wall 7, and supporting for rotation a substantially cylindrical roller 13.

Over opening 8 and directly over shaft 12, wall 7 presents a bush 14 through which is fitted for rotation a shaft 15 parallel and substantially identical to shaft 12, and fitted with a roller 16 substantially identical to and located directly over roller 13. Inside upright 6, shaft 15 is connected to the output of a motor 17 for rotating roller 16 clockwise (in Fig.1) at a variable, substantially constant surface speed V1.

Wall 18 of upright 6, perpendicular to wall 7, is fitted with a winding device 19 comprising a known actuating device 20 connected to a central portion of wall 18 between shafts 12 and 15. Device 19 presents a known actuating block 21 integral with wall 18 and having an output arm 22 extending parallel to and on the same side as shafts 12 and 15, and terminating with a toothed annular ring nut 23 having a substantially horizontal axis 24 perpendicular to arm 22. Ring nut 23 may be maintained in a fixed angular position about axis 24, or oscillated about axis 24 by block 21, and meshes with a coaxial toothed annular ring nut 25 fitted to a shaft 26 coaxial with axis 24 and extending towards shafts 12 and 15. The free end of shaft 26 is connected integral with one point of an annular body 27 splittable in known manner into two half rings, and lying in a substantially horizontal plane 28 (Fig.s 5 and 6) inclinable variably and cyclically by actuating block 21.

Annular body 27 extends partly inside and partly outside the gap between rollers 13 and 16 at a winding station 29, and constitutes a slideway for a powered carriage 30 running anticlockwise (in Fig.1) along annular body 27 at a substantially constant speed V2. Carriage 30 supports for rotation a spool 31 for a continuous reinforcing wire 32, preferably but not necessarily consisting of a metal wire, and preferably coated with green elastomeric material.

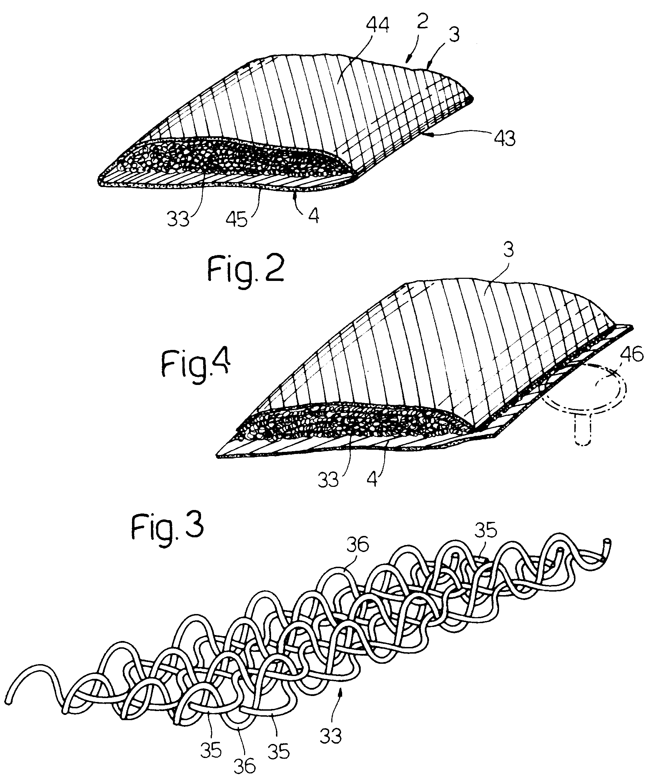

In actual use, an elastic annular element or insert 33 is looped about rollers 13 and 16, which element 33 may be formed, as in the Fig.3 example, from interwoven semirigid wires 35 and 36 defining equally-spaced sinusoidal curves and laid perpendicular to one another.

Annular element 33 is stretched by actuating device 11 to a given tension, so as to define, between rollers 13 and 16, two parallel, substantially vertical branches 37 and 38, of which branch 37 extends through winding station 29.

At this point, annular body 27 is closed about branch 37; motor 17 is operated for driving annular element 33 at speed V1 equal to the surface speed of roller 16; and carriage 30 is operated so as to travel along annular body 27 at speed V2, and rotate spool 31 with continuous wire 32 about branch 37, one end of wire 32 being simply pressed on to the surface of annular element 33.

As branch 37 travels through station 29 at speed V1 and spool 31 rotates about branch 37 at speed V2, wire 32 is wound about branch 37 to produce a cylindrical coil 39 having a number of turns 40 (Fig.1) consisting of an outer branch 41 and an inner branch 42 oppositely inclined in relation to plane 28 and as a function of the ratio of speeds V1 and V2.

A number of complete turns of annular element 33 results in the formation of a number of coils 39, the turns 40 of which are slightly offset in relation to those of the other coils, so as to produce, using a single continuous wire 32, a spliceless tubular annular element 43 enclosing annular element 33 and defined by an annular wall 44 and an annular wall 45 integral with each other and located respectively outside and inside annular element 33.

According to a procedure not shown, prior to forming coil/s 39, spool 31 is preferably employed for spirally winding a skim stock strip (not shown) about annular element 33. Similarly, a further skim stock strip (not shown) may be formed to advantage for outwardly covering coil/s 39.

As shown in Fig.2, walls 44 and 45 respectively define tread plies 3 and 4, which may be left integral to form a tubular tread belt 2, or cut (Fig.4) by a cutting device 46 to form a tread belt defined by separate plies 3 and 4 on either side of annular element 33.

In either case, by virtue of annular element 33, the resulting tread belt constitutes, inside the tire, an elastically and radially deformable structure designed to cooperate with the sidewalls of the tire for absorbing relatively low-frequency radial stress, the term "relatively low" being intended to mean a frequency of at most ten cycles per second.

As already stated, if speeds V1 and V2 are maintained constant, and plane 28 is positioned parallel to the axes of rollers 13 and 16, as shown in Fig.5, each turn 40 presents a pitch the length of which is a function of the ratio of V1 and V2, and branches 41 and 42 of each turn 40 form, with the perpendicular to plane 28, equal opposite angles A also as a function of the ratio of V1 and V2. If, on the other hand, plane 28 is inclined at a fixed constant angle B (Fig.6) in relation to the axes of rollers 13 and 16, branches 41 and 42 of each turn 40 form, with the perpendicular to the axes of rollers 13 and 16, opposite angles C and D again depending on the ratio of V1 and V2 but differing by a constant proportional to the value of angle B.

Finally, if annular body 27 is oscillated cyclically (not shown) about axis 24, so that it is inclined, for example, by an angle "+B" when forming branch 41, and an angle "-B" when forming branch 42, the two angles formed by branches 41 and 42 will again be equal and opposite, but will differ, by a given constant as a function of B, from the value as a function of the ratio of V1 and V2. In other words, by oscillating annular body 27, the inclination of branches 41 and 42 may be varied slightly while at the same time maintaining speeds V1 and V2 constant.

## Claims

1. A method of producing a vehicle tire reinforced tread belt (2) comprising two portions defining two superimposed reinforced tread plies (3, 4) and having oppositely-inclined reinforcing wires; said method being characterized by the fact that the reinforced tread belt (2) is produced by spirally winding a reinforcing wire (32) in a coil (39) about an elastic annular element (33), so as to produce, at least partially, a spliceless tubular annular element (43), a first (44) and second (45) annular portion of which, located respectively outside and inside the elastic annular element (33), define said two tread plies (3, 4).

2. A method as claimed in Claim 1, characterized by the fact that said wire (32) is wound spirally in a coil (39) about said annular element (33) by feeding the wire (32) along an annular path (27) extending through the annular element (33), and by simultaneously rotating the annular element (33) at a second given traveling speed (V1).

3. A method as claimed in Claim 2, characterized by the fact that the required pitch of said coil (39) is achieved by moving the wire (32) and the annular element (33) at a respective first (V2) and second (V1) given speed; said pitch being a function of the ratio of said two speeds (V2, V1).

4. A method as claimed in Claim 3, characterized by the fact that said coil (39) comprises a number of turns (40), each defined by two branches (41, 42) respectively outside and inside said annular element (33); said outer and inner branches (41, 42) being oppositely inclined at angles also depending on the ratio of said two speeds (V2, V1).

5. A method as claimed in Claim 2, 3 or 4, characterized by the fact that said continuous wire (32) is wound about the elastic annular element (33) by feeding the wire (32) in a plane (28) forming a given angle with the annular element (33).

6. A method as claimed in Claim 5, characterized by the fact that said plane (28) is so positioned as to form an angle of substantially 90° with said elastic annular element (33), and so that the reinforcing wires of said tread plies (3, 4) are inclined by substantially equal opposite angles (A).

7. A method as claimed in Claim 5, characterized by the fact that said plane (28) is so positioned as to form an angle (B) of other than 0° with the perpendicular to said annular element (33), and so that the reinforcing wires of said tread plies (3, 4) are inclined at different opposite angles (C, D).

8. A method as claimed in Claim 2, 3 or 4, characterized by the fact that said continuous wire (32) is wound about the elastic annular element (33) by feeding the wire (32) in a plane (28) oscillated in relation to the annular element (33) with a period equal to the time taken by the wire (32) to travel along said annular path (27).

9. A method as claimed in any one of the foregoing Claims, characterized by the fact that said elastic annular element (33) is stretched to a tension which may be varied as required within a given range.

10. A method as claimed in any one of the foregoing Claims, characterized by the fact that said first and second annular portions (44, 45) of said tubular element (43) are cut apart.

11. A device for producing a vehicle tire reinforced tread belt (2) comprising two portions defining two superimposed reinforced tread plies (3, 4) and having oppositely-inclined reinforcing wires; said device (1) being characterized by the fact that it comprises means (13, 16) for supporting an elastic annular element (33); and means (19) for spirally winding a reinforcing wire (32) in a coil (39) about said elastic annular element (33), so as to produce, at least partially, a spliceless tubular annular element (43), a first (44) and second (45) annular portion of which, located respectively outside and inside the elastic annular element (33), define said two tread plies (3, 4).

12. A device as claimed in Claim 11, characterized by the fact that said winding means (19) comprise annular guide means (27) extending through said elastic annular element (33); powered slide means (30) traveling along said guide means (27) at a first given speed (V2); and a wire-carrier element (31) fitted to said slide means (30); drive means (17) being provided for rotating said supporting means (13, 16) and driving said annular element (33) at a second given speed (V1).

13. A device as claimed in Claim 12, characterized by the fact that said guide means (27) are located in a plane (28) forming an angle of substantially 90° with said elastic annular element (33).

14. A device as claimed in Claim 12, characterized by the fact that said guide means (27) are located in a plane (28) forming an angle (B) of other than 0° with the perpendicular to said elastic annular element (33).

15. A device as claimed in Claim 12, characterized by the fact that it comprises first actuating means (20) for oscillating said guide means (27) about an axis (24) substantially perpendicular to said elastic annular element (33).

16. A device as claimed in any one of the foregoing Claims from 12 to 15, characterized by the fact that said supporting means (13, 16) comprise a first (13) and second (16) roller extending through said elastic annular element (33); one (16) of said rollers being powered.

17. A device as claimed in Claim 16, characterized by the fact that second actuating means (10, 11) are provided for adjusting the center distance of said rollers (13, 16).
